# EUROPÄISCHE PATENTSCHRIFT

(11) **EP 0 563 531 B1**
(45) Veröffentlichungstag und Bekanntmachung des Hinweises auf die Patenterteilung: **12.06.1996**
(21) Anmeldenummer: 93101604.2
(22) Anmeldetag: 03.02.1993
(51) Int. Cl.: G01N 3/00

(54) **Verfahren und Vorrichtung zur Erzeugung einer Abschäl- oder Abreissprobe an einer verschweissten Platine**
Method and device for performing a peeling or tearing test on a welded plate
Méthode et dispositif pour effectuer des essais de pelage ou de déchirement sur une plaque soudée

(30) Priorität: 03.04.1992 CH 1087/92; 12.05.1992 CH 1522/92
(43) Veröffentlichungstag der Anmeldung: 06.10.1993
(73) Patentinhaber: ELPATRONIC AG, CH-6303 Zug (CH)
(72) Erfinder: Benedikt, Georg, CH-8200 Schaffhausen (CH); Urech, Werner, CH-8434 Kaiserstuhl (CH)

(56) Entgegenhaltungen:
- GB-A- 2 241 066
- US-A- 2 959 051
- US-A- 4 292 852
- US-A- 4 875 376
- J.J. VAGI ET AL. 'DMIC Report 244: Weldment evaluation methods' August 1968 , DEFENSE METALS INFORMATION CENTER , BATELLE MEMORIAL INST., COLUMBUS OH 43201, US Seiten 32-45, 'Cracking susceptibility tests'

## Beschreibung

Die Erfindung betrifft ein Verfahren zur Erzeugung einer Abschäl- oder Abreissprobe an einer verschweissten Platine oder einem Platinenteil. Ferner betrifft die Erfindung eine Vorrichtung zur Durchführung des Verfahrens gemäss Anspruch 9 und eine weitere Vorrichtung zur Durchführung des Verfahrens gemäss Anspruch 13.

Es ist bekannt, Bleche miteinander durch Verschweissung, insbesondere durch Quetschnaht- oder Laserverschweissung zu verbinden. Die miteinander verbundenen Bleche werden als Platine bezeichnet. Zur Ergänzung der Qualitätsüberprüfung werden regelmassig Platine oder Platinenteile mit der Schweissnaht dem Produktionsprozess entnommen und durch Zerstörung der Platine wird die Schweissnaht auf Festigkeit geprüft. Zu diesem Zweck werden in das eine der beiden verbundenen Bleche Schnitte mit einer Blechschere angebracht, um eine Zunge des Bleches freizulegen. Diese Zunge wird umgebogen und mittels eines geschlitzten Schlüssels erfasst. Der Schlüssel wird gedreht und dabei wird die Zunge auf den Schlüssel aufgewickelt, wobei die Aufwicklung in Richtung auf die Schweissnaht hin erfolgt. Der Schlüssel wird bis zur Zerstörung des Materials gedreht. Aus der Lage und der Beschaffenheit der Zerstörungsstelle in der Zunge oder in der Schweissnaht, lässt sich mittels einer visuellen Prufung durch eine entsprechend geschulte Person, die Qualität der Schweissnaht beurteilen. Das geschilderte Verfahren hat sich in mehreren Punkten als nicht optimal erwiesen. Einerseits ist das Verfahren relativ zeitaufwendig, da die Schneide- und Biegeoperationen separat von Hand ausgeführt werden. Anderseits zeigt es sich, dass das Resultat des Abreissens bzw. Abschälens von Hand mittels des erwähnten Schlüssels je nachdem, wie es von der Bedienungsperson durchgeführt wird, zu recht unterschiedlichen Resultaten führen kann. Dies kann die nachfolgende visuelle Beurteilung der Schweissnaht erschweren.

Der Erfindung liegt deshalb die Aufgabe zugrunde, ein Verfahren zu schaffen, welches die genannten Nachteile nicht aufweist. Insbesondere soll das Verfahren die rasche Herstellung einer grossen Zahl von Abschäl - oder Abreissproben ermöglichen, und es sollen möglichst konstante Bedingungen für den eigentlichen Abschäl- oder Abreissvorgang geschaffen werden.

Dies wird bei einem Verfahren der eingangs genannten Art dadurch erreicht, dass mittels eines Schneid- und Biegeelementes ein durch das Schneid- und Biegeelement dimensionsdefinierter Abschnitt der Platine geformt wird, und dass der Abschnitt an eine Einrichtung gekoppelt wird, welche auf den Abschnitt eine definierte Zugkraft ausübt, die über den Abschnitt auf die Schweissnaht einwirkt.

Durch die Herstellung des Abschnittes mittels eines Schneid- und Biegeelements werden bereits in diesem Arbeitsgang definierte Verhältnisse geschaffen, was dem nachfolgenden Abschäl- oder Abreissschritt zugute kommt. Ferner können auf diese Weise rasch eine grosse Zahl von Probestücken auch durch angelerntes Bedienungspersonal erstellt werden. Der nachfolgende Schritt des Ziehens mit definierter Kraft stellt sicher, dass sich durch den Vorgang des Ziehens keine zu einer Fehlbeurteilung Anlass gebende Beeinflussung ergeben kann.

Bei einer Ausführungsart des Verfahrens wird die Platine während des Schneidens und Biegens auf einem Tisch festgehalten. Während des nachfolgenden Abreissens oder Abschälens des Abschnittes wird hingegen die Platine frei beweglich auf dem Tisch angeordnet. Vorzugsweise erfolgt dabei das Abreissen oder Abschälen des Abschnittes über eine gerundete Kante des Tisches. Durch die geschilderten Massnahmen wird ein Einfluss des Tisches auf die Beschaffenheit der Probe verhindert.

Bei einer weiteren Ausführungsart ist die Probe während des Ziehens am Tisch fest eingespannt und dieser weist keine gerundete, sondern eine eckige Kante auf; dadurch wird das Abschälen gefördert.

Eine bevorzugte Probengeometrie ergibt sich, wenn der Abschnitt als ein auf die Schweissnaht hin zulaufender Abschnitt geformt wird, wobei ein Winkel der Schnittlinie von ca. 15 Grad zur Senkrechten auf die Schweissnaht eingehalten wird. Die Schnittlinien enden jeweils ca. 5 mm von der Schweissnaht entfernt und dort wird der geschnittene Abschnitt auch abgebogen.

Der Erfindung liegt weiter die Aufgabe zugrunde, eine Vorrichtung für die Durchführung des Verfahrens zu schaffen. Eine solche Vorrichtung ist gemäss Anspruch 9 bzw. gemäss Anspruch 13 definiert.

Im folgenden sollen Ausführungsbeispiele der Erfindung anhand der Zeichnungen näher erläutert werden. Dabei zeigt
Figur 1 eine Aussenansicht einer Vorrichtung zur Durchführung des Verfahrens;
Figur 2 einen ersten Vertikalschnitt durch die Vorrichtung von Figur 1;

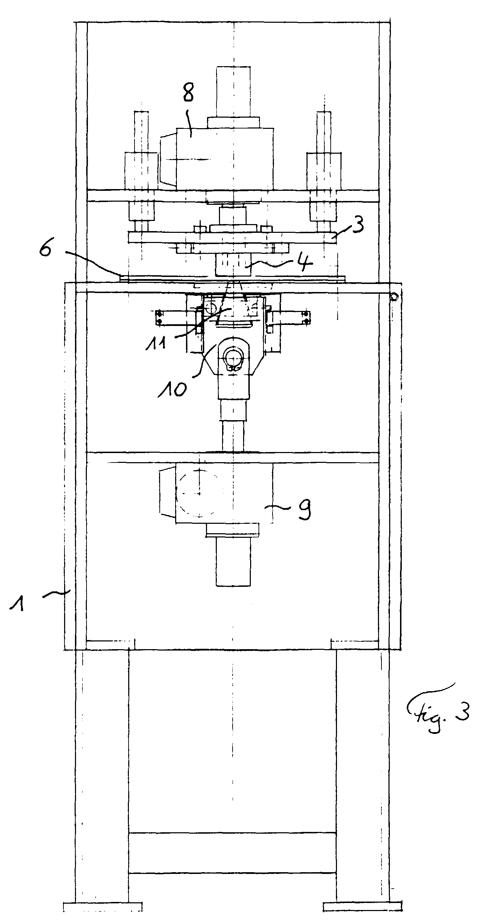

Figur 3 einen zweiten Vertikalschnitt durch die Vorrichtung von Figur 1;
Figur 4 eine Ansicht eines geschnittenen und gebogenen Platinenteils;
Figur 5 eine Teilansicht der Zugvorrichtung von Figur 1; und
Figur 6 einen Vertikalschnitt durch eine weitere geschnittene und geformte Abreissprobe.

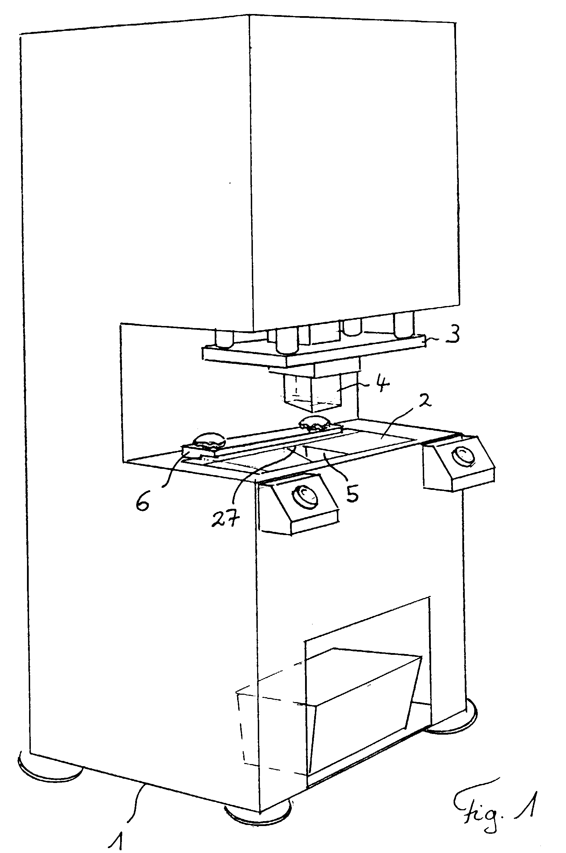

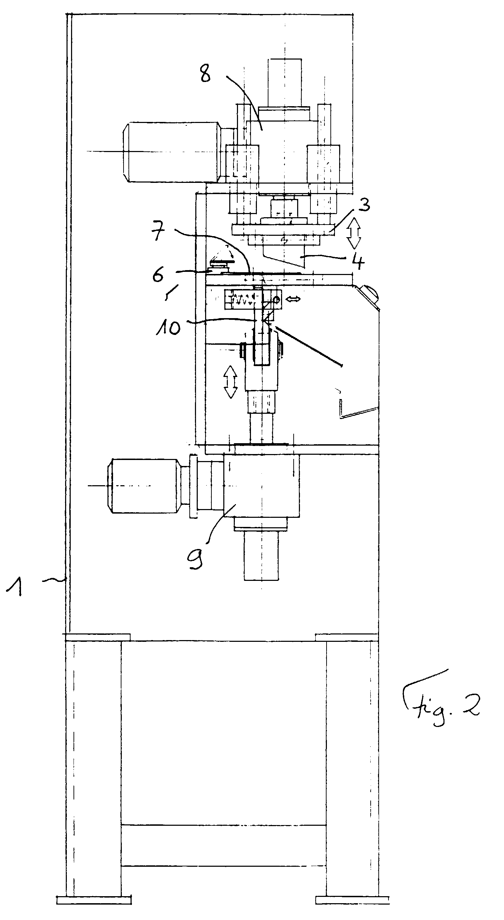

Figur 1 zeigt eine Vorrichtung 1 zur Durchführung des Verfahrens. Die Vorrichtung 1 weist einen Tisch 2 auf. Oberhalb des Tisches 2 ist eine Druckplatte 3 angeordnet, welche einen Schneid- und Biegestempel 4 trägt. Die Druckplatte 3 und damit der Schneid- und Biegestempel 4 sind durch eine Betätigungseinheit 8 (Figur 2) in Richtung auf den Tisch und von diesem weg verfahrbar. Auf den Tisch 2, welcher eine Ausnehmung 5 für den Schneid- und Biegestempel aufweist, wird die Platine oder der Platinenteil aufgelegt. Zur Ausrichtung der Platine oder des Platinenteils ist ein verstellbarer Anschlag 6 vorgesehen. Der Anschlag 6 ermöglicht eine Plazierung der Platine oder des Platinenteils mit der Schweissnaht parallel oder schiefwinklig zur längeren Tischkante. Unter dem Tisch 2 ist eine Betätigungseinheit 9 für eine Greiferplatte 10 vorgesehen, welche den geschnittenen und gebogenen Abschnitt der Platine aufnehmen kann, wie nachfolgend näher erläutert werden wird. Der Tisch 2 weist ferner eine (nicht dargestellte) Halteanordnung für die Platine oder den Platinenteil auf. Diese Halteanordnung kann zum Beispiel aus unter der Tischplatte angeordneten Elektromagneten oder einem mechanischen Niederhalter bestehen.

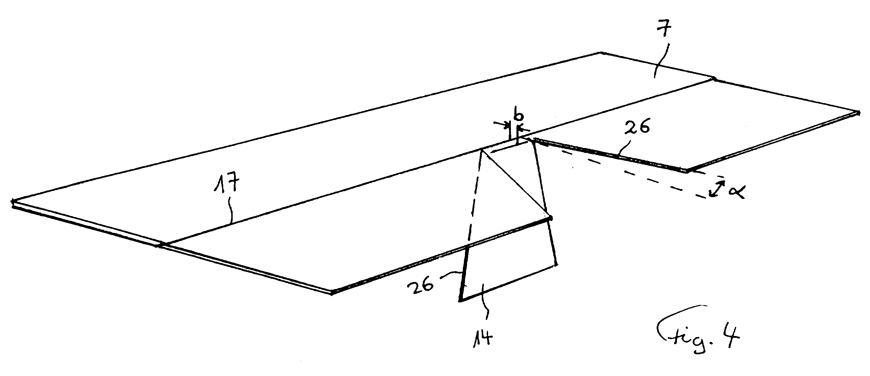

Zur Durchführung des Verfahrens wird eine ebene Platine oder ein Platinenteil 7 (Figur 4) auf den Tisch 2 aufgelegt und an den bereits eingestellten Anschlag 6 herangeschoben. Danach hält die Halteanordnung den Platinenteil 7 fest. Der Schneid- und Biegestempel wird nach unten verfahren und schneidet aus der Platine einen seiner Form entsprechenden Abschnitt heraus und biegt diesen nach unten unter die Tischebene um, wozu die Tischausnehmung 5 vorgesehen ist. Es ergibt sich nach diesem ersten Schritt ein Platinenteil 7 mit einem nach unten abgebogenen Abschnitt 14, wie in Figur 4 gezeigt. Das in Figur 4 gezeigte Platinenteil 7 mit den beiden mittels der Schweissnaht 17 verbundenen Blechen ist dabei nur als bevorzugtes Ausführungsbeispiel gezeigt. Anstelle der gezeigten Quetschnahtverschweissung kann insbesondere auch eine stumpfe Laserverschweissung ausgeführt sein. In dem Beispiel ist der Abschnitt 14 durch den Schneid- und Biegestempel 4 derart geformt, dass die Schnittlinien 26 in Richtung auf die Schweissnaht 17 aufeinander zulaufen. Die Schnittlinien 26 bilden dabei jeweils mit der Senkrechten auf die Schweissnaht einen Winkel α von ca. 15°. Die Biegung des Abschnittes 14 nach unten erfolgt in einem Abstand b von der Schweissnaht 17, welcher ca. 5 mm beträgt.

Die beschriebene Form des Abschnitts 14 hat insbesondere den Vorteil, dass der Abschnitt 14 für den nächsten Schritt des Verfahrens auf einfache Weise von der unter dem Tisch angeordneten Greiferplatte 10 gefasst werden kann. Die Greiferplatte 10 ergreift den Abschnitt 14 während dem der Schneid- und Biegestempel 4 wieder nach oben über die Tischplatte 2 verfahren wird. Der Platinenteil 7 wird weiterhin von der Halteanordnung gehalten. Nachdem die Greiferplatte 10 den Abschnitt 14 erfasst hat, wird die Halteanordnung gelöst und der Platinenteil 7 liegt frei auf dem Tisch 2 auf. Mittels der Greiferplatte 10 wird nun der Abschnitt 14 nach unten gezogen bis der Abschnitt 14 oder die Schweissnaht 17 zerstört ist. Damit die hintere Kante 27 der Tischausnehmung 5 das Resultat nicht beeinflusst, ist diese Kante 27 gerundet und der Platinenteil 7 liegt, wie gesagt, frei auf dem Tisch 2 auf. Nach der Zerstörung des Abschnittes 14 wird der Rest der Platine 2 von der Vorrichtung 1 genommen und die Bruchstelle wird auf bekannte Weise visuell geprüft, um die Qualität der Schweissnaht zu überprüfen.

Bei einer anderen Ausführungsart wird der Abschnitt 14 während der Zerstörung fest auf dem Tisch gehalten, vorzugsweise von einem mechanischen Niederhalter. Die Tischkante ist ferner scharfkantig und stützt die Probe gleich neben der Naht, d.h. auf der der Zunge gegenüber liegenden Seite. Dies ergibt eine möglichst grosse Abschältkomponente.

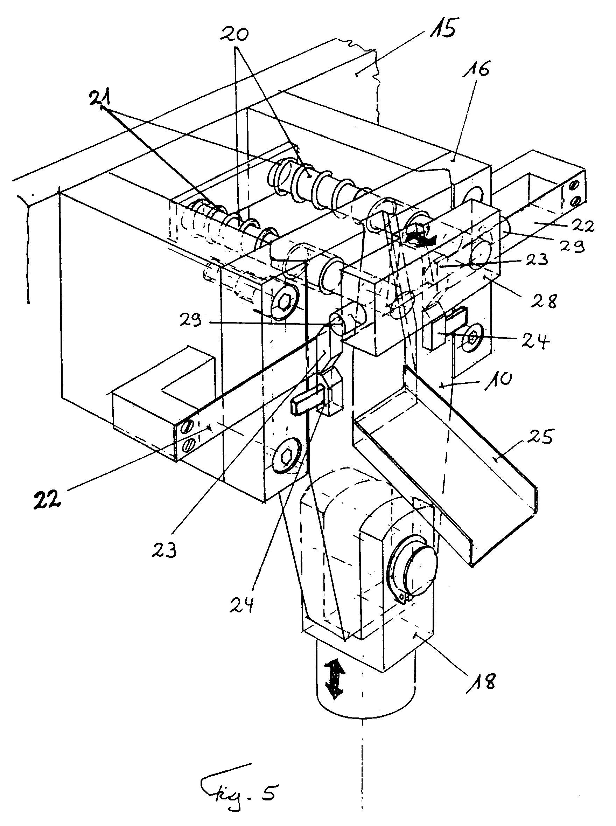

Figur 5 zeigt die Greiferplatte 10 und deren Gleitführung 16, welche fest am Maschinenkasten 15 der Vorrichtung 1 befestigt ist. Die Greiferplatte 10 ist mittels der Gabel 18 mit der Betätigungseinheit 9 verbunden und kann auf diese Weise nach oben und unten bewegt werden. Die Betätigungseinheit 9 sowie auch die Betätigungseinheit 8 können jeweils pneumatische, hydraulische oder elekromotorische Antriebe umfassen. Wenn die Greiferplatte 10 nach oben in Richtung auf den Tisch 2 verfahren wird, um den Abschnitt 14 zu greifen, so wird dabei der Druckbacken 28 von der Greiferplatte 10 abgehoben, damit der Abschnitt 14 zwischen Greiferplatte und Druckbacken einfahren kann. Das Abheben des Druckbackens 28, der mittels Führungsachsen 20 und daran angeordneten Druckfedern 21 an der Greiferplatte 10 befestigt ist, erfolgt mittels Stellstücken 23 auf welche jeweils ein Zapfen 29 des Druckbackens aufläuft, wodurch dieser gegen die Federkraft der Druckfedern 21 von der Greiferplatte 10 abgehoben wird. Am Ende des Verfahrweges nach oben werden die Zapfen 29 nicht mehr von den Stellstücken 23 beaufschlagt, so dass der Druckbacken 28 von den Druckfedern 21 gegen die Greiferplatte 10 gepresst wird, wodurch der Abschnitt 14 in die entsprechende Ausnehmung 11 in der Greiferplatte 10 eingeführt wird. Der Abschnitt 14 ist somit in der Greiferplatte 10 durch die Form von dessen Ausnehmung 11 und durch den Druckbacken 28 gehalten. Beim Verfahren der Greiferplatte 10 nach unten wird nachfolgend auf bereits geschilderte Weise der Abschnitt 14 von dem Platinenteil 7 abgerissen bzw. abgeschält. Beim Verfahren der Greiferplatte 10 und des Druckbackens 28 nach unten greifen die Zapfen 29 unterhalb der oberen vorderen Kante der Stellstücke 23 an. Da diese Stellstücke 23 mittels Blattfedern 22 federnd gehalten sind, können diese Stellstücke 23 bei der Abwärtsbewegung den Zapfen 29 ausweichen. Der Druckbacken 28 wird daher bei der Abwärtsbewegung zunächst nicht geöffnet und hält den Abschnitt 14 fest, um das Abreissen bzw. Abschälen durchführen zu können. Nach dem Verfahrweg nach unten, welche für die Zerstörung der Probe notwendig ist, treffen die Zapfen 29 auf feste Stellstücke 24, welche ein Oeffnen des Druckbackens gegen die Kraft der Druckfedern 21 bewirken. Durch diese Oeffnung des Druckbackens 28 wird der abgerissene bzw. abgeschälte Abschnitt 14 freigegeben und kann über eine Rutsche 25 in einen Behälter abgeführt werden. Sofern auch der Abschnitt 14 zur Beurteilung der Schweissnaht 17 herangezogen werden soll, so kann danach der Abschnitt 14 aus dem Behälter entnommen werden. In diesem Fall ist es ferner vorteilhaft, wenn vor oder gleichzeitig mit der Schneid- und Biegeoperation eine Markierung der Platine und des Abschnittes 14 erfolgt, damit auch nach der Abtrennung des Abschnittes 14 eine Zuordnung dieses Abschnittes zu der entsprechenden Platine gemacht werden kann.

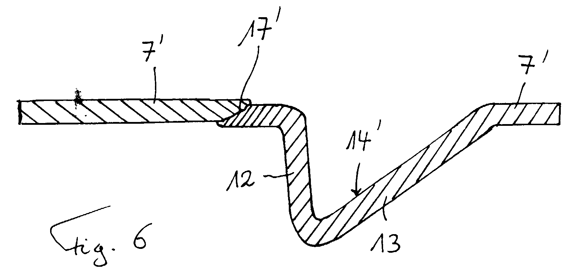

Figur 6 zeigt eine weitere Form, welche in der Platine 7' durch die Schneid- und Biegeoperation des Schneid- und Biegestempels 4 erzielt werden kann. Bei dieser Form ist die vordere Kante des Abschnitts 14 weiterhin an der Platine 7' befestigt. Der Abschnitt 14 wird nur seitlich von der Platine 7' freigeschnitten und geformt wie in Figur 6 ersichtlich. Die Formung umfasst einen steil nach unten abgebogenen ersten Abschnitteil 12 und einen damit verbundenen nur flach nach unten gebogenen Abschnitteil 13. Bei dieser Formgebung des Abschnitts 14 kann der zweite Verfahrensschritt, das Abreissen bzw. Abschälen des Abschnitts 14 von der Platine 7', dadurch durchgeführt werden, dass der Schneid- und Biegestempel 4 nach der Schneid- und Biegeoperation weiter nach unten verfahren wird und damit als Zugeinrichtung wirkt. Durch das weitere Hinunterfahren des Schneid- und Biegestempels 4 wird nämlich eine Zugkraft auf den ersten Abschnittsteil 12 ausgeübt, in Richtung auf die Schweissnaht 17', welche wiederum zu einer Zerstörung des Abschnittes 14 oder der Schweissnaht 17' führt. Bei dieser Ausgestaltung des Verfahrens kann bei der Vorrichtung 1 auf die unter dem Tisch 2 angeordnete Zugeinrichtung verzichtet werden. Statt mit dem Schneid- und Biegestempel kann der Abschälvorgang auch mit einem separaten, nach Bedarf anders geformten Abreiss- bzw. Abschälstempel durchgeführt werden.

## Patentansprüche

1. Verfahren zur Erzeugung einer Abschäl- oder Abreissprobe an einer verschweissten Platine, oder einem Platinenteil, dadurch gekennzeichnet, dass mittels eines Schneid- und Biegeelementes ein durch das Schneid- und Biegeelement dimensionsdefinierter Abschnitt der Platine geformt wird, und dass der Abschnitt an eine Einrichtung gekoppelt wird, welche auf den Abschnitt eine definierte Zugkraft ausübt, die über den Abschnitt auf die Schweissnaht einwirkt.

2. Verfahren nach Anspruch 1, dadurch gekennzeichnet, dass die Platine oder der Platinenteil auf einem Tisch mit einer Ausnehmung für das Schneid- und Biegeelement angeordnet wird, dass die Platine oder der Platinenteil während des Schneidens und Biegens an dem Tisch fixiert ist, und dass die Platine oder der Platinenteil während der Zugkraftausübung im wesentlichen frei auf dem Tisch aufliegt.

3. Verfahren nach Anspruch 1, dadurch gekennzeichnet, dass die Platine oder der Platinenteil während des Schneidens, Biegens und der Zugkraftausübung auf einem Tisch mit einer Ausnehmung für das Schneid- und Biegeelement fixiert wird.

4. Verfahren nach Anspruch 2 oder 3 dadurch gekennzeichnet, dass der Abschnitt über eine gerundete Kante der Ausnehmung des Tisches gezogen wird, oder dass der Abschnitt über eine scharfkantige Kante der Ausnehmung gezogen wird.

5. Verfahren nach einem der Ansprüch 1 bis 4, dadurch gekennzeichnet, dass ein auf die Schweissnaht hin zulaufender Abschnitt geformt wird.

6. Verfahren nach Anspruch 5, dadurch gekennzeichnet, dass die Schnittlinie jeweils in einem Winkel von ca. 15 Grad zur Senkrechten auf die Schweissnaht steht.

7. Verfahren nach einem der Ansprüche 1 bis 6, dadurch gekennzeichnet, dass der Abschnitt im Abstand von ca. 5 mm von der Schweissnaht umgebogen wird.

8. Verfahren nach einem der Ansprüche 1 bis 7, dadurch gekennzeichnet, dass das Schneid- und Biegeelement einen eine Aufnahme (12, 13) für das Element bildenden Abschnitt (14') formt und nach dem Schneid- und Biegeschnitt weiter in Richtung auf die Platine bzw. den Platinenteil bewegt wird, um eine in Richtung auf die Schweissnaht wirkende Zugkraft zu bewirken.

9. Vorrichtung zur Durchführung des Verfahrens nach einem der Ansprüche 1 bis 7, gekennzeichnet durch einen Tisch (2) zur Auflage der Platine oder des Platinenteils (7), eine oberhalb des Tisches angeordnete Betätigungseinrichtung (8) für einen Schneid- und Biegestempel (4) und eine unterhalb des Tisches (2) angeordnete Zugeinrichtung (9, 10).

10. Vorrichtung nach Anspruch 9, dadurch gekennzeichnet, dass der Tisch (2) eine Ausnehmung (5) für den Schneid- und Biegestempel (4) aufweist, deren biegeseitige Kante (27) gerundet oder scharfkantig ist.

11. Vorrichtung nach Anspruch 9 oder 10, dadurch gekennzeichnet, dass der Tisch (2) einen verstellbaren Anschlag (6) und eine lösbare Halterung für die Platine oder den Platinenteil aufweist.

12. Vorrichtung nach einem der Ansprüche 9 bis 11 zur Durchführung des Verfahrens nach Anspruch 5, dadurch gekennzeichnet, dass die Zugeinrichtung eine zulaufende Ausnehmung (11) aufweist, welche zur Aufnahme des Abschnittes (14) bestimmt ist.

13. Vorrichtung zur Durchführung des Verfahrens nach Anspruch 8,gekennzeichnet durch einen Tisch (2) zur Auflage der Platine bzw. des Platinenteils und eine oberhalb des Tisches angeordnete Betätigungseinrichtung (8) für einen Schneid-, Biege- und Druckstempel, welcher nach der Schneid- und Biegeoperation weiter in Richtung auf die Platine verfahrbar ist.

## Claims

1. Process for producing a peel- or tear-test on a welded plate bar or a portion thereof, **characterized in that** a section of the plate bar, the dimension of which is defined by a cutting or bending element, is formed by means of a cutting and bending element, and that the cutout is coupled to a device which exerts onto the cutout to a defined tension which acts through the cutout on the welded seam.

2. Process according to Claim 1, **characterized in that** the plate bar or a portion thereof is arranged on a table with an opening for the cutting and bending element, that the plate bar or a portion thereof is fixed to the table during cutting and bending, and that the plate bar or a portion thereof lies essentially freely on the table whilst exerting said tension.

3. Process according to Claim 1, **characterized in that** the plate bar or a portion thereof is fixed to a table with an opening for the cutting and bending element during cutting, bending and exerting said tension.

4. Process according to Claim 2 or 3, **characterized in that** the cutout is pulled over a rounded edge of the opening of the table, or that the cutout is pulled over a sharp-edged edge of the opening.

5. Process according to one of Claims 1 to 4, **characterized in that** a cutout is formed which extends towards the welding seam.

6. Process according to Claim 5, **characterized in that** the cutting line is at a respective angle of approximately 15 degrees to the vertical relative to the welding seam.

7. Process according to one of Claims 1 to 6, **characterized in that** the cutout is bent at a distance of approximately 5 mm from the welding seam.

8. Process according to one of Claims 1 to 7, **characterized in that** the cutting and bending element forms a cutout (14') serving as a receptacle (12, 13) for the element, and after the cutting and bending cut it is moved further in the direction of the plate bar or a portion thereof in order to generate a tensional load which is operative in the direction of the welding seam.

9. Device for carrying out the process according to one of Claims 1 to 7, **characterized by** a table (2) for placing the plate bar or a portion thereof (7), an operating device (8) for a cutting and bending punch arranged above the table, and a pulling device (9, 10) arranged below the table (2).

10. Device according to Claim 9, **characterized in that** the table (2) comprises an opening (5) for the cutting and bending punch (4), its edge (27) on the bending side being rounded or sharp-edged.

11. Device according to Claim 9 or 10, **characterized in that** the table (2) comprises an adjustable stop (6) and a releasable holder for the plate bar or a portion thereof.

12. Device according to one of Claims 9 to 11 for carrying out the process according to Claim 5, **characterized in that** the pulling device comprises a convergent recess (11) intended to receive the cutout (14).

13. Device for carrying out the process according to Claim 8, **characterized by** a table (2) for supporting the plate bar or a portion thereof, and above the table an operating device (8) for a cutting, bending and pressing punch which can be moved further in the direction of the plate bar after a cutting and bending operation.

## Revendications

1. Procédé de réalisation d'un témoin d'arrachement ou de rupture sur une platine soudée, ou une partie de platine, caractérisée en ce qu'une portion de la platine est façonnée au moyen d'un élément de coupe et de pliage, les dimensions de cette portion de la platine étant définies par l'élément de coupe et de pliage, et en ce que la portion de platine est accouplée à un dispositif qui exerce sur cette portion une force définie de traction qui agit sur le cordon de soudure par l'intermédiaire de la portion de platine.

2. Procédé selon la revendication 1, caractérisé en ce que la platine ou la partie de platine est disposée sur une table comportant un évidement pour l'élément de coupe et de pliage, en ce que, pendant la coupe et le pliage, la platine ou la partie de platine est fixée sur la table et en ce que, pendant que la force de traction s'exerce, la platine ou partie de platine repose d'une manière pratiquement libre sur la table.

3. Procédé selon la revendication 1, caractérisé en ce que, pendant la coupe et le pliage et pendant que la force de traction s'exerce, la platine ou la partie de platine est fixée sur une table comportant un évidement pour l'élément de coupe et de pliage.

4. Procédé selon la revendication 2 ou 3, caractérisé en ce que la portion de platine est tirée au-dessus d'une arête arrondie de l'évidement de la table ou en ce que la portion de platine est tirée au-dessus d'une arête vive de l'évidement.

5. Procédé selon l'une des revendications 1 à 4, caractérisé en ce qu'il est formé une portion de platine convergeant vers le cordon de soudure.

6. Procédé selon la revendication 5, caractérisé en ce que chaque ligne de coupe fait un angle d'environ 15° avec la perpendiculaire au cordon de soudure.

7. Procédé selon l'une des revendications 1 à 6, caractérisé en ce que la portion de platine est repliée à la distance d'environ 5 mm du cordon de soudure.

8. Procédé selon l'une des revendications 1 à 7, caractérisé en ce que l'élément de coupe et de pliage réalise le formage d'une portion de platine (14') constituant un logement (12, 13) pour l'élément et en ce qu'après l'étape de coupe et de pliage, il est déplacé plus loin en direction de la platine ou de la partie de platine, afin d'exercer une force de traction agissant en direction du cordon de soudure.

9. Dispositif de mise en oeuvre du procédé selon l'une des revendications 1 à 7, caractérisé par une table (2), servant à l'appui de la platine ou de la partie de platine (7), un dispositif (8), disposé au-dessus de la table et servant à l'actionnement d'un poinçon de coupe et de pliage (4), et un dispositif de traction (9, 10) disposé au-dessous de la table (2).

10. Dispositif selon la revendication 9, caractérisé en ce que la table (2) comporte, pour le poinçon de coupe et de pliage (4), un évidement (5) dont l'arête (27) située du côté du pliage est arrondie ou est une arête vive.

11. Dispositif selon la revendication 9 ou 10, caractérisé en ce que la table (2) comprend une butée (6) à position réglable et un organe de maintien, pour la platine ou la partie de platine, qui est agencé de façon à pouvoir être libéré.

12. Dispositif selon l'une des revendications 9 à 11 pour la mise en oeuvre du procédé selon la revendication 5, caractérisé en ce que le dispositif de traction comporte un évidement (11) convergent qui est destiné à recevoir la portion de platine (14).

13. Dispositif de mise en oeuvre du procédé selon la revendication 8, caractérisé par une table (2), pour l'appui de la platine ou de la partie de platine, et, disposé au-dessus de la table, un dispositif d'actionnement (8) pour un poinçon de coupe, de pliage et de pression qui est agencé de façon à pouvoir être déplacé plus loin en direction de la platine après l'opération de coupe et de pliage.
